(19) Europäisches Patentamt
European Patent Office
Office européen des brevets

(11) **EP 2 113 956 A1**

(12) **EUROPEAN PATENT APPLICATION**

(43) Date of publication:
**04.11.2009 Bulletin 2009/45**

(51) Int Cl.:
*H01M 4/06* (2006.01)      *H01M 4/08* (2006.01)
*H01M 4/50* (2006.01)      *H01M 6/06* (2006.01)
*H01M 6/08* (2006.01)

(21) Application number: **09158550.5**

(22) Date of filing: **23.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **25.04.2008 JP 2008115550**

(71) Applicant: **Panasonic Corporation
Kadoma-shi
Osaka 571-8501 (JP)**

(72) Inventors:
• **Shimamura, Harunari
Osaka 540-6207 (JP)**
• **Nunome, Jun
Osaka 540-6207 (JP)**
• **Kato, Fumio
Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **Alkaline Battery**

(57)    An alkaline dry battery includes a positive electrode 2 containing manganese dioxide, a negative electrode 3 containing zinc, and an electrolyte containing a potassium hydroxide aqueous solution, which are encased in a cylindrical battery case 1 with a bottom. Among X-ray CT images scanned from part of the battery holding the positive electrode by slicing the battery by planes perpendicular to a center axis of the battery case 1 with intervals of 0.2 mm, CT images in which at least one crack is detected in a region of the positive electrode constitute 10% to 80% by number of the total X-ray CT images, the crack being identified by a brightness of 98% or less of that of part of the positive electrode region surrounding the crack.

FIG. 2

EP 2 113 956 A1

**Description**

BACKGROUND

The disclosure of this specification is directed to an alkaline dry battery.

Alkaline dry batteries have a large electric capacity as compared with manganese dry batteries and exhibit efficient discharge characteristics even during continuous service with a large current, and therefore have been employed in a wider range of applications. Meanwhile, the demand from the market is a dry battery of more improved discharge characteristics. As such, technical developments for improved discharge characteristics have been continued.

Japanese Laid-Open Patent Publication No. 2000-36301, for example, discloses a technique for improving the discharge characteristics of a battery by increasing the rate of effective use of active materials. Specifically, to increase the effective use rate of active materials, a generally-cylindrical positive electrode mixture pellet has a shallow recess on its surfaces which is formed during compression molding of the pellet such that, when the pellet is encased in a battery case, a narrow space occurs between the shallow recess and a surface of an element facing against the recess. This narrow space is used as a pool for electrolyte so that the amount of retained electrolyte is increased.

However, with the technique disclosed in Japanese Laid-Open Patent Publication No. 2000-36301, the electrolyte resides in the pool in the surface of the positive electrode pellet but only slowly permeates through the positive electrode pellet although the amount of retained electrolyte increases. During high-current discharge (high-rate discharge), the discharge characteristics deteriorate in a short period of time if a large amount of electrolyte which can relatively freely contribute to transfer of charge does not reside in the positive electrode pellet. In the technique disclosed in Japanese Laid-Open Patent Publication No. 2000-36301, permeation of the electrolyte through the positive electrode pellet is slow and the discharge characteristics accordingly deteriorate in a short time period as mentioned above, and thus, the increase of the amount of electrolyte retained does not lead to an improvement of the discharge characteristics during high-rate discharge.

SUMMARY

The present invention was conceived in view of the above circumstances and enables provision of an alkaline dry battery with superior high-rate discharge characteristics.

An alkaline dry battery embodiment of the present invention includes a cylindrical case with a bottom, a positive electrode containing manganese dioxide, a negative electrode containing zinc, and an electrolyte containing a potassium hydroxide aqueous solution, the positive and negative electrodes and the electrolyte being encased in the cylindrical case, wherein among X-ray CT images scanned from part of the battery holding the positive electrode by slicing the battery by planes perpendicular to a center axis of the cylindrical case with intervals of 0.2 mm, CT images in which at least one crack is detected in a region of the positive electrode constitute 10% to 80% by number of the total X-ray CT images, the crack being identified by a brightness of 98% or less of that of part of the positive electrode region surrounding the crack.

The crack here refers to a narrow break formed in the positive electrode. In an X-ray CT image scanned from a cracked portion of the positive electrode, the crack has a lower brightness than the positive electrode.

The positive electrode may contain polyethylene and a titanium compound.

The concentration of potassium hydroxide in the electrolyte may be 33.5 weight% or lower.

The alkaline dry battery may be of AA type. The manganese dioxide contained in the positive electrode may have a weight of 9.40 g or more. Herein, the weight of manganese dioxide contained in the positive electrode does not refer to the weight of electrolytic manganese dioxide which is commonly employed, but to the weight of pure manganese dioxide. The weight of pure manganese dioxide can be determined by a chemical analysis of battery contents. Note that, in general, the ratio of pure manganese dioxide contained in the electrolytic manganese dioxide is about 93 weight%. Under such conditions, the battery may contain 4.00 g or more of the electrolyte. The concentration of potassium hydroxide is a concentration determined by a chemical analysis of battery contents. In an evaluation procedure in which the battery is subjected to repetitions of a test sequence at 20°C till a discharge voltage reaches 1.05 V, the test sequence consisting of 10 repetitions of a discharge cycle followed by a non-discharge interval of 55 minutes in an open-circuit state, the discharge cycle consisting of first discharging with a constant power of 1500 mW for 2 seconds and second discharging with a constant power of 650 mW for 28 seconds, the alkaline dry battery may undergo 115 or more repetitions of the discharge cycle.

BRIEF DESCRIPTION OF THE DRAWINGS

FIG. 1 is a partially-broken, cross-sectional view of an alkaline dry battery embodiment.
FIG. 2 is a cross-sectional view of the alkaline dry battery of FIG. 1 taken along line A-A.

DETAILED DESCRIPTION

The history up to our arrival at the concept of the present invention is now described before the description of embodiments of the present invention.

Extending the life of a dry battery is generally considered to be achieved by increasing the amount of positive- and negative-electrode constituents stuffed in a battery case. In view of the fact that the shape and dimensions of dry batteries are defined in the IEC standards, possible strategies for increasing the amount of constituents in the battery are increasing the capacity of the battery case in which the constituents can be stuffed and increasing the packing density of the constituents.

It is naturally understood that a larger amount of positive- and negative-electrode constituents stuffed in the battery case leads to a larger battery capacity, and it is meanwhile known that the actual discharge characteristics depend on the amount and properties of constituents, such as electrolyte, separator, etc., as well as the amount of the positive and negative electrodes. Especially when the electrolyte cannot freely flow inside the positive and negative electrodes, transfer of charge inside the battery is inhibited, so that the battery results in an alkaline dry battery with low discharge characteristics.

The positive electrode of the alkaline battery is mainly composed of manganese dioxide and graphite. A mixture of these components, in the form of grains, is molded into positive electrode mixture pellets, which are then encased in a battery case. If the density of the mixture pellets is increased for the purpose of increasing the positive electrode constituents, the electrolyte less readily permeates through the mixture pellets and slowly flows inside the mixture pellet, so that the discharge characteristics deteriorate. If the density of the mixture is decreased for the purpose of increasing the flowability of the electrolyte inside the mixture pellet, the electric capacity of the battery decreases.

The present inventors carried out various studies and experiments in consideration of the above knowledge and found that the key is to form an appropriate number of cracks in the mixture pellet, arriving at the concept of the present invention.

Hereinafter, embodiments of the present invention are described in detail with reference to the drawings.

(Embodiment 1)

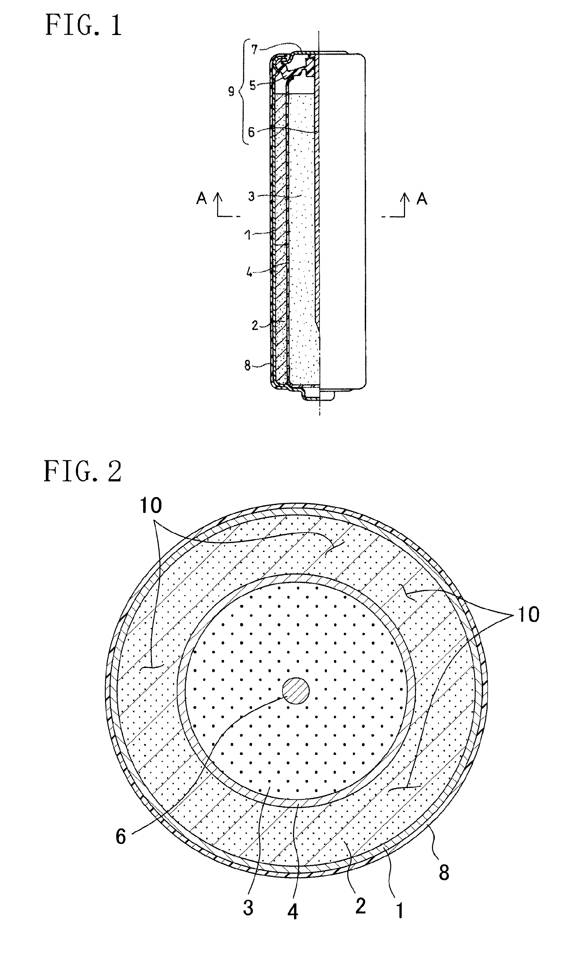

FIG. 1 is a partially-broken, cross-sectional view of an AA alkaline dry battery of embodiment 1. This AA alkaline dry battery includes a positive electrode 2 containing manganese dioxide, a negative electrode 3 containing zinc, and an electrolyte containing a potassium hydroxide aqueous solution (not shown), which are encased in a battery case (case) 1.

The structure of the AA alkaline dry battery of this embodiment is now described more specifically. The battery case 1, which is a cylindrical case with a bottom and which also serves as a positive electrode terminal, has an inner wall in contact with a positive electrode 2 that has the shape of a hollow cylinder. The hollow space of the positive electrode 2 is occupied by a negative electrode 3 such that a separator 4 having the shape of a bottomed cylinder is interposed between the positive electrode 2 and the negative electrode 3. The opening of the battery case 1 is sealed with a sealing unit 9. The sealing unit 9 is formed by a negative electrode plate 7, a negative electrode collector 6 welded to the negative electrode plate 7, and a sealing member 5 made of a resin. The negative electrode collector 6 is inserted into the center of the negative electrode 3. In the example described herein, the positive electrode 2, the separator 4, and the negative electrode 3 are impregnated with the electrolyte, although the electrolyte is not shown.

The battery case 1 is formed of, for example, a nickel-plated steel sheet by press-molding so as to have predetermined dimensions and shape based on the known methods disclosed in Japanese Laid-Open Patent Publications Nos. S60-180058, H11-144690, 2007-27046, and 2007-66762. In this embodiment, the outside diameter of the battery case 1 is 13.90 mm or more, but the upper limit is 14.10 mm. Using the methods disclosed in the latter two of the above publications advantageously secures a larger space inside the battery for stuffing a larger amount of constituents of the positive electrode 2 and the negative electrode 3. If the side wall (tubular part) of the battery case 1 has the thickness of 0.18 mm or smaller, the battery case 1 advantageously has a large inner volume.

The inner volume of the battery case 1 refers to the volume of a space encompassed by the inner surface of the battery case 1 that has the shape of a bottomed cylinder, the lower surface of the sealing member 5 made of a resin, and the outer surface of the negative electrode collector 6. Specifically, the inner volume can be measured through the following procedure: cutting the AA alkaline dry battery (except the negative electrode collector 6) along an imaginary plane which is near the positive electrode terminal and which is perpendicular to the center axis of the battery case 1; removing the positive electrode 2, the negative electrode 3, the separator 4 and the electrolyte out of the battery and washing the battery case 1; and pouring water in the battery case 1 cut into two parts, and measuring the volume of the poured water.

The outer surface of the battery case 1 is covered with a label jacket 8 made of a plastic film.

The positive electrode 2 is mainly composed of a positive electrode active material that contains manganese dioxide and a conductive agent, such as graphite powder, and also includes a small amount of additives, such as polyethylene, a titanium compound (e.g., metatitanic acid). The positive electrode 2 is in the form of a mixture pellet molded to have a cylindrical shape, which is encased in the battery case 1. Polyethylene serves as a binder for the positive electrode active material and the conductive agent. The titanium compound serves as a lubricant during preparation of the mixture pellet. The positive electrode mixture pellet encased in the battery case 1 is compressed such that cracks are formed in the pellet. Manganese dioxide contained in one dry battery cell is 9.40 g or more. Since such a large amount of manganese dioxide is contained, superior discharge characteristics (life) are achieved at middle rates and low rates as well as at high rates.

The cracks formed in the positive electrode mixture pellet can be detected by X-ray CT. Specifically, X-ray CT images are scanned from part of the battery holding the positive electrode 2 by slicing the battery by planes perpendicular to the center axis of the cylinder of the battery case 1. The scan is carried out with intervals of 0.2 mm along the center axis of the cylinder of the battery case 1 in a range where the positive electrode 2 is held. When the battery is an AA alkaline dry battery, the length of the positive electrode 2 along the center axis of the cylinder of the battery case 1 is about 43 mm, from which about 215 sectional images can be scanned. Referring to FIG. 2, each of the cracks 10 is a portion where the positive electrode mixture does not exist and has a lower brightness than in its surrounding area that is filled with the positive electrode mixture. Therefore, the presence of the cracks 10 can be visually confirmed. Specifically, the brightness of the crack portions 10 is represented relative to the brightness of the positive electrode mixture portion based on the brightness distribution measured over a line segment of about 0.6 mm drawn across the crack 10 in the CT image. More specifically, the maximum brightness value X (for the positive electrode mixture portion) and the minimum brightness value Y (for the crack portion 10) over the line segment drawn across the crack 10 are calculated to represent the brightness of the crack 10 as $(Y/X) \times 100$ [%]. In this embodiment, in non-discharge state, CT images in which at least one crack 10 with the brightness of 98% or less is detected constitute 10% to 80% by number of the total X-ray CT images. With an appropriate number of cracks 10 with the brightness of 98% or less in the positive electrode mixture, flowability of the electrolyte inside the positive electrode 2 is improved while a large amount of positive electrode mixture can be stuffed in the battery case 1. When polyethylene or a titanium compound is contained in the positive electrode 2, the number of the cracks 10 can be appropriately controlled. Lower brightness of a crack 10 in a CT image means that the actual crack 10 has a greater size. As the size of the actual crack 10 increases, the function of the crack 10 as a channel of diffusion of the electrolyte becomes greater.

The negative electrode 3 is a gel material mainly composed of a mixture of a gelatinizing agent (such as sodium polyacrylate) and the electrolyte, in which a negative electrode active material (such as zinc powder or zinc alloy powder) is mixed. The negative electrode active material is preferably zinc alloy powder which has excellent corrosion resistance, and is preferably free of mercury, cadmium, or lead for environmental friendliness. An example of the zinc alloy is a zinc alloy containing at least any one of indium, aluminum, and bismuth.

The separator 4 is formed by a nonwoven cloth mainly composed of, for example, a polyvinyl alcohol fiber and a rayon fiber such that the separator 4 endures the alkalescence of the electrolyte and allows the electrolyte to pass therethrough.

The electrolyte is an alkaline solution with the KOH concentration of 33.5 weight% or lower. The KOH concentration is measured by titration of the electrolyte contained in a manufactured battery. Japanese Laid-Open PCT National Phase Publication No. 2003-536230 discloses an alkaline electrochemical battery in which, for the purpose of extending the battery life, the concentration of a KOH aqueous solution before discharge is about 34 to 37%, and the calculated concentration value of the KOH aqueous solution in the case of one electron release from manganese dioxide is about 49.5 to 51.5%. In this embodiment, the KOH concentration is lower than in the battery disclosed in Japanese Laid-Open PCT National Phase Publication No.2003-536230 because the present inventors found that, with such a lower concentration, the discharge characteristics are more improved when the amount of active materials for the positive electrode 2 and the negative electrode 3 is increased. In other words, a smaller KOH concentration leads to an increase in viscosity of the electrolyte so that the flowability of the electrolyte inside the battery is improved and the dischargeable life is extended.

The electrolyte also contains ZnO, the concentration of which is preferably 3 weight% or lower and more preferably 2 weight% or lower. Note that the concentration of ZnO in the electrolyte is preferably 0.2 weight% or higher.

The negative electrode collector 6 is formed of a wire of silver, copper, brass, or the like, by pressing the wire into the shape of a nail that consists of body part in the form of a long needle and flange part with predetermined dimensions. An end of the body part opposite to the flange is pressed to have a projected head. The negative electrode collector 6 is connected to the negative electrode terminal 7 via the head. Herein, the negative electrode collector 6 is preferably plated with tin or indium over its surface in order to avoid impurities during fabrication and to achieve a shielding effect. The negative electrode collector 6 having such a structure can be fabricated based on known methods disclosed in, for example, Japanese Laid-Open Patent Publications Nos. H5-283080 and 2001-85018.

The negative electrode terminal 7 is formed of, for example, a nickel-plated steel sheet, a tin-plated steel sheet, or the like, by press-molding the sheet so as to have predetermined dimensions and shape.

The discharge characteristics (high-rate discharge characteristics) of the battery of the present embodiment described above was measured and found to have superior discharge characteristics as compared with the conventional battery cells and commercially-available alkaline dry batteries. In the alkaline dry battery, the number of cracks 10 formed in the positive electrode 2 which can be found in transverse X-ray CT images of the positive electrode 2 is appropriately adjusted such that superior high-rate discharge characteristics can be achieved.

EXAMPLES

(Example 1)

Firstly, zinc alloy powder containing 0.005 weight% of A1, 0.005 weight% of Bi, and 0.020 weight% of In relative to the weight of zinc was prepared by gas atomization. The prepared zinc alloy powder was classified using a sieve to sift out zinc alloy powder in the particle size range of 70 to 300 mesh, and the sifted zinc alloy powder is adjusted such that the proportion of particles with a particle size of 200 mesh (75 $\mu$m) or lower is 30%. The resultant zinc alloy powder was used as the active material for the negative electrode.

Then, 2.2 weight parts of polyacrylate and sodium polyacrylate were mixed into 100 weight parts of 33 weight% potassium hydroxide aqueous solution (containing 2 weight% of ZnO), and the resultant mixture was gelated. The resultant gel electrolyte was left at rest for 24 hours to be sufficiently matured.

Thereafter, into a predetermined amount of the thus-prepared gel electrolyte, the previously-prepared zinc alloy powder at the weight ratio of 1.92 times the gel electrolyte, 0.025 weight parts of indium hydroxide (including 0.016 weight parts of indium) per 100 weight parts of the zinc alloy powder, and 0.1 weight parts of anionic surfactant (alcohol sodium phosphate with the average molecular weight of about 210) per 100 weight parts of the zinc alloy powder were respectively mixed. The resultant mixture was sufficiently kneaded and used as a gel negative electrode.

Then, electrolytic manganese dioxide (HHTF manufactured by TOSOH CORPORATION) and graphite (SP-20 manufactured by Nippon Graphite Industries, ltd.) were mixed together at the weight ratio of 94:6. Into 100 weight parts of the resultant mixture powder, 1.5 weight parts of electrolyte (33 weight% potassium hydroxide aqueous solution (containing 2 weight% of ZnO)), 0.2 weight parts of polyethylene binder, and 0.2 weight parts of metatitanic acid were mixed. The resultant mixture was evenly stirred and mixed by a mixer such that the mixture has a uniform particle size. The resultant particles were compression-molded into the shape of a hollow cylinder, which was for use as the positive electrode mixture pellet.

Then, an AA alkaline dry battery was fabricated for evaluation. Two positive electrode mixture pellets prepared as described above (single pellet weighed 5.65 g) were encased in the battery case 1 as shown in FIG. 1. The weight of 1.2 t (per the area of $\varphi$14 mm) was applied inside the battery case 1 for recompression such that the pellets are in tight contact with the inner surface of the battery case 1 and that cracks 10 were formed in the pellets. In the hollow of the positive electrode mixture pellets, the separator 4 and a bottom insulator for insulation at the bottom were inserted, and then, 1.83 g of the electrolyte prepared as described above was injected in the battery case. After the electrolyte was injected, the gel negative electrode 3 was injected to fill the hollow of the separator 4. The resin sealing member 5, the negative electrode terminal 7, and the negative electrode collector 6 were inserted into the negative electrode 3, and the edge of the opening of the battery case 1 was caulked with the periphery of the negative electrode terminal 7 via the edge of the sealing member 5 such that the opening of the battery case 1 was tightly sealed. The label jacket 8 was wrapped around the external surface of the battery case 1 in the final step of the fabrication of the AA alkaline dry battery sample A1.

The resin sealing member was made of 6,12-nylon. The negative electrode collector used was a copper wire plated with Sn. The separator used was a separator for alkaline dry battery manufactured by KURARAY CO., LTD. (composite fiber made of Vinylon and Tencel).

(Example 2)

Sample battery A2 was produced under the same conditions as example 1 except that the weight of recompression of the positive electrode mixture pellets in the battery case 1 was 1.6 t (per the area of $\varphi$14 mm).

(Example 3)

Sample battery A3 was produced under the same conditions as example 1 except that the weight of recompression of the positive electrode mixture pellets in the battery case 1 was 0.2 t (per the area of $\varphi$14 mm).

(Comparative Example 1)

Sample battery B was produced under the same conditions as example 1 except that polyethylene and metatitanic acid were not mixed in the preparation of the positive electrode mixture, that the weight of recompression of the positive electrode mixture pellets in the battery case 1 was 1.6 t, that 34.5 weight% potassium hydroxide aqueous solution was used as the electrolyte, and that the amount of manganese dioxide and the amount of electrolyte were reduced.

(Comparative Example 2)

Sample battery C was e$^2$ TITANIUM TECHNOLOGY (AA size-X91 LR6-AM3-1.5V), an AA dry battery manufactured by Energizer which was best before 2012.

(Comparative Example 3)

Sample battery D was ULTRA DIGITAL (AA 1.5VMX1500 LR6), an AA dry battery manufactured by DURACELL which was best before MAR 2013.
The procedure of evaluation of the sample batteries is described below.

(1) Cracks in the Positive Electrode Mixture Pellets

<Procedure for X-ray CT Scan>

The batteries were scanned by X-ray Computed Tomography (CT). The system used was a microfocus X-ray CT system SMX-225CT-SV manufactured by SHIMADZU CORPORATION. The conditions for scanning were as follows. Both the horizontal size and the vertical size of each sliced CT image were 1024 pixels. The X-ray tube voltage was 160 kV. The X-ray tube current was 40 μA. The I. I. size (screen size) was 9 inch I. I. S. I. D (distance from X-ray source to screen) was 322.49 mm. S. O. D. (distance from X-ray source to battery) was 18.72 mm. Table position (Z) was 6.364 mm. The slice thickness was 0.4 mm. The number of views was 2400. The average number was 2. The scaling factor was 10. CT mode 1 was 2D-CT, CT mode 2 was offset scan, and CT mode 3 was full scan. FOV (XY) was 14.163511 mm. The nominal pixel length was 0.013832 mm/pixel. The slice pitch was 0.2 mm.
In the CT scanning, the batteries were unused batteries and each scanned from the positive electrode terminal to the negative electrode terminal under the above conditions with the battery standing upright on its negative terminal such that the direction from the positive electrode terminal to the negative electrode terminal is coincident with the direction of gravity. In the scanning, the batteries were sliced by planes perpendicular to the direction of gravity. Thereafter, a circular pole of aluminum with φ10 mm was also scanned under the same conditions. Thereafter, line profile software dedicated to the system was used to calculate the brightness. The calculation method was such that, in the images sliced from a battery, a line segment of 0.5 to 0.7 mm was drawn in a positive electrode portion, and the brightness was measured along the line segment. The line segment was drawn so as to traverse a black furrow-like portion (crack) in the positive electrode portion. The lightest point (maximum brightness value) and the darkest point (minimum brightness value) over the line segment were retrieved to calculate the difference between these values in percentages:

$$\text{Brightness Difference Rate (\%)}$$
$$= (\text{Maximum Brightness} - \text{Minimum Brightness})/(\text{Maximum Brightness}) \times 100.$$

The proportion of the number of images in which at least one crack with the brightness difference rate of 2% or more was detected relative to the number of total images scanned from part of the battery holding the positive electrode is referred to as the percentage [%] of images including a crack with the brightness difference of 2% or more (see Table 1).

(2) Amount of MnO$_2$, Concentration of KOH, Amount of Electrolyte

The label jacket was stripped off from the battery, and the battery was cut open in the sealing portion, through which the sealing member was pulled out. The sealing member was then washed with ion-exchanged water to dump the negative electrode gel and electrolyte adhering over the sealing member into a beaker. Then, the negative electrode gel remaining in the battery was thoroughly transferred into the beaker, and the separator was pulled out of the battery. The separator was washed with ion-exchanged water to dump the negative electrode gel and electrolyte adhering over the separator into the beaker. The sealing member and the separator were dried and measured by weight.

The negative electrode gel collected in the beaker underwent about 10 cycles of water washing and decantation so that substantially the whole of KOH was contained in supernatant liquid fractionated from the negative electrode gel. The supernatant liquid was subjected to neutralization titration with 1N hydrochloric acid to determine the amount of KOH (al) contained in the supernatant liquid. The negative electrode gel residue (zinc powder and gelatinizing agent) was washed and dried, and measured by weight.

The positive electrode mixture was pulled out of the battery case and dried, and then measured by weight. Thereafter, the positive electrode mixture was crushed and mixed in a concentrated hydrochloric acid solution. The resultant mixture solution was heated such that $MnO_2$ was dissolved and then filtered such that $MnO_2$ was separated from the residue. Part of the residue which was not dissolved in the hydrochloric acid solution (the graphite conductive agent and binder component contained in the positive electrode mixture) was dried and measured by weight. An aliquot of a certain amount was taken from the solution in which $MnO_2$ was dissolved, and droplets of $(1+1)NH_4OH$ were added to adjust the aliquot to pH 3. Hydrogen peroxide was added to the adjusted aliquot solution, which was then stirred. Furthermore, the resultant solution was mixed in a concentrated $NH_4OH$ solution, and the mixed solution was stirred so that precipitations of $MnO_2$ were generated. These $MnO_2$ precipitations were filtered and washed with water and then thoroughly dissolved by 10W/V% hydroxylamine hydrochloride and (1+1) hydrochloric acid. To the solution, triethanolamine, an ammonium chloride-ammonia buffer solution, and a TPC indicator were added. The solution was titrated with a 1/20M-EDTA solution to determine the amount of $MnO_2$. The determined amount of $MnO_2$ was converted to the amount of $MnO_2$ contained in a single piece of battery. From this $MnO_2$ amount, the weight of electrolytic manganese dioxide (EMD) contained in the battery was calculated (the pure $MnO_2$ content ratio in EMD was about 93%).

Another aliquot of a certain amount was taken from the solution in which $MnO_2$ was dissolved. The aliquot was analyzed by atomic absorption spectrometry (using SpectrAA 55B manufactured by VARIAN/standard addition method) to quantitate the amount of potassium, which was then converted to the amount of KOH contained in the positive electrode mixture (a2).

Still another aliquot of a certain amount was taken from the solution in which $MnO_2$ was dissolved. The aliquot was analyzed by ICP emission spectroscopy (using VISTA-RL manufactured by VARIAN) to quantitate titanium. When undissolved Ti was partially remaining in the residue, the residue was baked at 900°C for 2 hours in the atmosphere so that carbon and polyethylene were removed from the residue. The resultant residue was mixed with $K_2CO_3$ powder, and the mixture was kneaded and molten at 900°C in a platinum crucible in the presence of air. Thereafter, the molten salt was dissolved in a concentrated hydrochloric acid solution, and the resultant solution was analyzed by ICP emission spectroscopy to quantitate titanium. If titanium was successfully quantitated, it was determined that a titanium compound was "added". If quantitation of titanium failed, it was determined that a titanium compound was "not added".

The aforementioned dried residue which was not dissolved in the hydrochloric acid solution (the graphite conductive agent and binder component contained in the positive electrode mixture) was subjected to TG-DTA measurement (using ThermoPlus TG-DTA manufactured by RIGAKU) to quantitate polyethylene. The measurement was conducted at the temperature varying from the room temperature to 750°C with the increase rate of 1°C/min in Ar atmosphere (with the flow rate of 100 ml/min). The amount of polyethylene was quantitated based on the weight decrement from 300°C to 700°C. If polyethylene was successfully quantitated, it was judged that polyethylene was "added". If quantitation of polyethylene failed, it was judged that polyethylene was "not added".

From the above measurements, the weight of electrolyte in the battery (c) was determined by subtracting the total weight of elements other than the electrolyte (the total weight of label jacket, battery case, sealing member, separator, zinc powder and gelatinizing agent, EMD, and the residue undissolved in hydrochloric acid solution) from the total weight of the battery. Based on the total amount of KOH in the battery (a1+a2), the KOH concentration [weight%] in the electrolyte was calculated (=(a1+a2)/c).

(3) Discharge Characteristics

Discharge Condition (A): The battery was discharged with 43 $\Omega$ for 4 hours and then left at rest for 20 hours. This process of discharge and non-discharge intervals, referred to as one discharge process, was repeated till the discharge voltage decreases to 0.9 V. The accumulated discharge time was evaluated as the battery discharge time. The discharging of the battery was carried out in an environment at 20°C. Note that this evaluation was carried out for evaluation of the low-rate discharge characteristics.

Discharge Condition (B): The battery was discharged at 1500 mW for 2 seconds and then discharged at 650 mW for 28 seconds. The cycle of these discharge intervals, referred to as one discharge cycle, was repeated 10 times, for 5 minutes in total. Thereafter, the battery was left at rest for 55 minutes. This sequence of 60 minutes, referred to as one test sequence, was continuously repeated till the discharge voltage decreases to 1.05 V. The number of repetitions of the discharge cycle was evaluated. The discharging of the battery was carried out in an environment at 20°C. The number of repetitions of the discharge cycle is an index for evaluation of the high-rate discharge characteristics.

The evaluation results of examples 1-3 and comparative examples 1-3 are shown in Table 1.

[TABLE 1]

| | Battery | Percentage of images incl. crack with brightness diff. of 2% or more [%] | Addition of Polyethylene | Addition of Titanium Compound | KOH Concentration [wt%] | $MnO_2$ Weight [g] | Electrolyte Amount [g] | Discharge Time for Condition (A) [hr] | Discharge Repetitions for Condition (B) |
|---|---|---|---|---|---|---|---|---|---|
| Example 1 | Battery A1 | 60 | Added | Added | 31.5 | 9.60 | 4.12 | 101.1 | 158 |
| Example 2 | Battery A2 | 80 | Added | Added | 31.5 | 9.60 | 4.12 | 100.5 | 154 |
| Example 3 | Battery A3 | 10 | Added | Added | 31.5 | 9.60 | 4.12 | 100.0 | 152 |
| Comparative 1 | Battery B | 85 | Not Added | Not Added | 33.5 | 8.81 | 3.74 | 91.8 | 110 |
| Comparative 2 | Battery C | 0 | Added | Added | 34.0 | 9.47 | 3.94 | 92.6 | 99 |
| Comparative 3 | Battery D | 5 | Not Added | Not Added | 35.4 | 8.92 | 4.16 | 92.2 | 106 |

As seen from Table 1, from the AA alkaline dry batteries of example 1 (sample batteries A1 to A3), CT images in which a crack with the brightness difference of 2% or more was detected constitute 10% to 80% by number of the total CT images. The number of repetitions of the discharge cycle for the discharge condition (B), which is the index of the high-rate discharge characteristics, is 150 or more. This very large number means that the sample batteries A1 to A3 have superior high-rate discharge characteristics as compared with the sample batteries B, C and D of comparative examples 1-3. For example, sample battery C of example 2 contains a larger amount of manganese dioxide, but achieves a smaller number of repetitions of the discharge cycle, which is about 2/3 of those of the sample batteries A1 to A3 of examples 1-3. The battery discharge time for the discharge condition (A), which is the index of the low-rate discharge characteristics, is longer by about 10 %, i.e., more excellent, in the sample batteries A1 to A3 of examples 1-3 than in the sample batteries B, C and D of comparative examples 1-3.

(Other Embodiments)

Although embodiment 1 is directed to AA alkaline dry batteries, the present invention is not limited to AA-type batteries.

An alkaline dry battery of the present invention has a number of cracks in the positive electrode which is adjusted to be in an appropriate range, so that channels of the electrolyte are secured in the positive electrode. Therefore, the high-rate discharge characteristics are improved.

As described above, an alkaline dry battery of the present invention is excellent in high-rate discharge characteristics and is therefore useful for applications of digital cameras, motor-driven devices, flash lamps, etc.

**Claims**

1. An alkaline dry battery, comprising a cylindrical case with a bottom, a positive electrode containing manganese dioxide, a negative electrode containing zinc, and an electrolyte containing a potassium hydroxide aqueous solution, the positive and negative electrodes and the electrolyte being encased in the cylindrical case, wherein among X-ray CT images scanned from part of the battery holding the positive electrode by slicing the battery by planes perpendicular to a center axis of the cylindrical case with intervals of 0.2 mm, CT images in which at least one crack is detected in a region of the positive electrode constitute 10% to 80% by number of the total X-ray CT images, the crack being identified by a brightness of 98% or less of that of part of the positive electrode region surrounding the crack.

2. The alkaline dry battery of claim 1, wherein the positive electrode contains at least one of polyethylene and a titanium compound.

3. The alkaline dry battery of claim 1, wherein a concentration of potassium hydroxide in the electrolyte is 33.5 weight% or lower.

4. The alkaline dry battery of claim 1, wherein
the alkaline dry battery is of AA type, and
the manganese dioxide contained in the positive electrode has a weight of 9.40 g or more.

5. The alkaline dry battery of claim 4, wherein the electrolyte contained in the battery has a weight of 4.00 g or more.

6. The alkaline dry battery of claim 4, wherein in an evaluation procedure in which the battery is subjected to repetitions of a test sequence at 20°C till a discharge voltage reaches 1.05 V, the test sequence consisting of 10 repetitions of a discharge cycle followed by a non-discharge interval of 55 minutes in an open-circuit state, the discharge cycle consisting of first discharging with a constant power of 1500 mW for 2 seconds and second discharging with a constant power of 650 mW for 28 seconds, the alkaline dry battery undergoes 115 or more repetitions of the discharge cycle.

# FIG. 1

# FIG. 2

Europäisches
Patentamt

European
Patent Office

Office européen
des brevets

## EUROPEAN SEARCH REPORT

Application Number

EP 09 15 8550

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 075338 A (FDK CORP) 15 March 2002 (2002-03-15) * the whole document * | 1 | INV. H01M4/06 H01M4/08 |
| A | * abstract * * figures 1,2 * & [Online] Retrieved from the Internet: URL:http://dossier1.ipdl.inpit.go.jp/AIPN/ aipn_call_transl.ipdl?N0000=7413&N0120=01& N2001=2&N3001=2002-075338> ----- | 3-6 | H01M4/50 H01M6/06 H01M6/08 |
| A | US 4 247 606 A (UETANI YOSHIO ET AL) 27 January 1981 (1981-01-27) * column 1, lines 38-52 * * column 2, lines 50-54 * ----- | 1,3 | |
| D,A | JP 2000 036301 A (MATSUSHITA ELECTRIC IND CO LTD) 2 February 2000 (2000-02-02) * abstract * ----- | 1-6 | |

TECHNICAL FIELDS
SEARCHED (IPC)

H01M

The present search report has been drawn up for all claims

| Place of search | Date of completion of the search | Examiner |
|---|---|---|
| Munich | 11 August 2009 | Fitzpatrick, John |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 15 8550

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2009

| Patent document cited in search report | | Publication date | Patent family member(s) | | Publication date |
|---|---|---|---|---|---|
| JP 2002075338 | A | 15-03-2002 | NONE | | |
| US 4247606 | A | 27-01-1981 | CH | 641596 A5 | 29-02-1984 |
| | | | DE | 2811709 A1 | 04-01-1979 |
| | | | FR | 2395616 A1 | 19-01-1979 |
| | | | GB | 1568493 A | 29-05-1980 |
| | | | JP | 54007537 A | 20-01-1979 |
| JP 2000036301 | A | 02-02-2000 | JP | 4269355 B2 | 27-05-2009 |

EPO FORM P0459

For more details about this annex : see Official Journal of the European Patent Office, No. 12/82

**EP 2 113 956 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000036301 A
- JP S60180058 B
- JP H11144690 B
- JP 2007027046 A
- JP 2007066762 A
- JP 2003536230 PCT
- JP H5283080 PCT
- JP 2001085018 PCT